(19) Europäisches Patentamt

European Patent Office

Office européen des brevets

(11) **EP 1 331 256 A1**

(12) **EUROPEAN PATENT APPLICATION**
published in accordance with Art. 158(3) EPC

(43) Date of publication:
**30.07.2003 Bulletin 2003/31**

(51) Int Cl.$^7$: **C09D 175/04**, C09D 161/28,
C09D 133/08, C09D 5/02

(21) Application number: **01972659.5**

(22) Date of filing: **02.10.2001**

(86) International application number:
**PCT/JP01/08685**

(87) International publication number:
**WO 02/028978 (11.04.2002 Gazette 2002/15)**

(84) Designated Contracting States:
**AT BE CH CY DE DK ES FI FR GB GR IE IT LI LU MC NL PT SE TR**

(30) Priority: **03.10.2000 JP 2000303652**

(71) Applicant: **KANSAI PAINT CO., LIMITED
Amagasaki-shi Hyogo 661-0964 (JP)**

(72) Inventors:
- **OOKUBO, Takashi Kansai Paint Co, . Ltd.
  Hiratsuka-shi, Kanagawa 254-0016 (JP)**
- **ADACHI, Takato c/o, Kansai Paint Co., Ltd.
  Hiratsuka-shi, Kanagawa 254-0016 (JP)**

- **ISAKA, Hisashi c/o, Kansai Paint Co., Ltd.
  Hiratsuka-shi, Kanagawa 254-0016 (JP)**
- **FUJII, Takeshi c/o, Kansai Paint Co., Ltd.
  Hiratsuka-shi, Kanagawa 254-0016 (JP)**
- **IGARASHI, Hiroshi c/o, Kansai Paint Co., Ltd.
  Hiratsuka-shi, Kanagawa 254-0016 (JP)**

(74) Representative: **Stuart, Ian Alexander et al
MEWBURN ELLIS
York House
23 Kingsway
London WC2B 6HP (GB)**

(54) **AQUEOUS COATING COMPOSITION**

(57) A water based coating composition prepared by dispersing by use of a suspension stabilizer into water a film-forming component comprising 30 to 90% by weight of (a) a blocked isocyanate compound having at least two blocked isocyanate groups in one molecule and a number average molecular weight of 150 to 5000, and 10 to 70% by weight of (b) a methylol group or methylol ether group-containing aminoplast crosslinking agent, so that the film-forming component may be dispersed into water in the form of a mean particle size by a 50% cumulative particle size of 0.1 to 10 μm.

EP 1 331 256 A1

**Description**

Field of the Invention:

The present invention relates to a water based coating composition capable of forming a coating film showing good properties in acid resistance and coating film appearance, and having a very low content of a volatile organic compound (hereinafter may be referred to as VOC).

Background Art:

Recently, demands on a coating composition having such a low VOC content as to satisfy environmental regulations have advanced developments of a water based coating composition in place of an organic solvent based coating composition. It is an essential condition for the water based coating composition to select such a curing system that the coating composition is stable in water during storage. For example, a curing system comprising an acid and epoxy group is difficult to be used as a water based composition, because a crosslinking reaction takes place during storage. As such a water based coating composition that neither crosslinking reaction nor decomposition takes place during storage, a coating composition comprising a hydroxyl group-containing resin and an aminoplast crosslinking agent, and a coating composition comprising a hydroxyl group-containing resin and a polyfunctional blocked polyisocyanate compound are well known in the art.

Further, a topcoat of an automobile has recently raised problems of deteriorations such as discoloration, etching, etc. due to acid rain. It is well known in the art that a coating composition comprising a hydroxyl group-containing resin and an aminoplast crosslinking agent has been used as an automobile top clear coat with the results that a coating film formed from the coating composition shows a poor resistance to etching caused by acid rain.

As a coating composition capable of showing a relatively good acid resistance, a coating composition comprising a hydroxyl group-containing resin and a polyfunctional blocked isocyanate compound is also known in the art, resulting in producing such problems that a high temperature heat curing at 160°C or so is necessary to provide good acid resistance and that the coating film after heat curing shows poor coating film appearances such as coloring, poor smoothness and the like.

Accordingly, developments of a coating composition capable of providing good properties in both acid resistance and coating film appearance have been made. For example, Japanese Patent Application Laid-Open No. 25431/93 discloses an organic solvent based coating composition comprising a hydroxyl group-containing resin, a high alkyl etherified melamine resin and a blocked polyisocyanate, and teaches that a reaction between a carbonium ion derived from a melamine resin and an active hydrogen in the blocked polyisocyanate forms a crosslinking showing good acid resistance and results good coating film appearance. However, the above coating composition is an organic solvent based coating composition and has such drawbacks that reduction in an amount of the organic solvent for the purpose of providing a coating composition having a low content of VOC reduces a coating workability, coating film smoothness, etc., resulting in making it impossible to reduce the amount of VOC to less than 179.7 kg/m$^3$.

Disclosure of the Invention:

For the purpose of solving the above problems, the present inventors made intensive studies to find out that a water based coating composition prepared by dispersing by use of a suspension stabilizer into water a film-forming component comprising 30 to 90% by weight of (a) a blocked isocyanate compound having at least two blocked isocyanate groups in one molecule and a number average molecular weight of 150 to 5000, and 10 to 70% by weight of (b) a methylol group or methylol ether group-containing aminoplast crosslinking agent based on the weight of the film-forming component so that the film-forming component is dispersed into water in the form of a mean particle size by a 50% cumulative particle size of 0.1 to 10 μm, can completely solve the above problems, resulting in accomplishing the present invention.

That is, the present invention provides a water based coating composition prepared by dispersing by use of a suspension stabilizer into water a film-forming component comprising 30 to 90% by weight of (a) a blocked isocyanate compound having at least two blocked isocyanate groups in one molecule and a number average molecular weight of 150 to 5000, and 10 to 70% by weight of (b) a methylol group or methylol ether group-containing aminoplast crosslinking agent, so that the film-forming component may be dispersed into water in the form of a mean particle size by a 50% cumulative particle size of 0.1 to 10 μm.

Most Preferable Embodiments of the Invention

The component (a) used in the composition of the present invention is a blocked isocyanate compound having at least two blocked isocyanate groups in one molecule. The isocyanate compound may include, for example, aliphatic isocyanates such as hexamethylene diisocyanate, trimethylhexamethylene diisocyanate, lysine diisocyanate and the like; alicyclic isocyanates such as isophorone diisocyanate, methylcyclohexane-2,4- (or 2,6) diisocyanate, 4,4'-methylene bis (cyclohexylisocyanate), 1,3-(isocyanatomethyl) cyclohexane and the like; aromatic isocyanates such as tolylene diisocyanate, xylylene diisocyanate, diphenylmethane diisocyanate and the like; polyfunctional isocyanates such as lysine triisocyanate and the like; and polyisocyanates, for example, cyclic polymerization polymer such as isocyanurate, biuret, respectively.

The isocyanate compound used in the present invention may also include an acrylic resin prepared by copolymerizing unsaturated monomers having isocyanate group as a functional group, for example, isocyanatoethyl (meth) acrylate, isocyanatopropyl (meth)acrylate, isocyanatobutyl (meth)acrylate, isocyanatohexyl (meth)acrylate, n-isopropenyl-$\alpha,\alpha'$-dimethylbenzyl isocyanate, m-ethylenyl-$\alpha,\alpha'$-dimethylbenzyl isocyanate and the like. These isocyanate compounds in the present invention may be used alone or in combination to be blocked. Of these, polyisocyanate derived from hexamethylene diisocyanate is particularly preferable.

The blocking agent used for blocking the isocyanate group may include monohydric alcohols such as methanol, ethanol, n-propanol, isopropanol, n-butanol, isobutanol, n-hexanol, 2-ethylhexanol, cyclohexanol, ethylene glycol monomethyl ether, ethylene glycol monobutyl ether, propylene glycol monomethyl ether, benzyl alcohol and the like; polyhydric alcohols such as ethylene glycol, propylene glycol, trimethylene glycol, 1,4-butanediol, 1,3-butanediol, 2,3-butanediol, 1,5-pentanediol, 1,4-pentanediol, 2,4-pentanediol, 1,6-hexanediol, 1,5-hexanediol, 1,4-hexanediol, glycerin, trimethylolpropane, trimethylolethane and the like; phenols such as phenol, cresol, xylenol and the like; lactams such as $\epsilon$-caprolactam, $\delta$-valerolactam, $\gamma$-butylolactam, $\beta$-propiolactam and the like; oximes such as acetoxime, methyl ethyl ketoxime and the like; active methylene compounds such as diethyl malonate ethyl acetoacetate and the like. Of these blocking agents, monohydric alcohols having $C_{1-20}$ alkyl group is particularly preferable. A mixture of at least two of these blocking agents may also be used. Blocking may easily be carried out by mixing the isocyanate compound with the blocking agent so as to block the isocyanate group.

The blocked polyisocyanate (a) in the composition preferably has a number average molecular weight in the range of 150 to 5000. When the number average molecular weight is less than 150, unsatisfactory crosslinking of the coating film may reduce coating film performances such as acid resistance and the like. On the other hand, a number average molecular weight more than 5000 may reduce a finish appearance of the coating film.

The methylol group-containing aminoplast crosslinking agent (b) may be prepared by reacting an amino resin such as melamine, urea, benzoguanamine, acetoguanamine and the like with aldehyde. Examples of the aldehyde may include formaldehyde, paraformaldehyde, acetoaldehyde, benzaldehyde and the like. The methylol ether group-containing aminoplast crosslinking agent (b) may be prepared by etherifying the methylol group in the methylol group-containing crosslinking agent with at least one alcohol selected from methyl alcohol, ethyl alcohol, n-propyl alcohol, i-propyl alcohol, n-butyl alcohol, i-butyl alcohol, 2-ethylbutanol, 2-ethylhexanol and the like. The amino resin is preferably melamine resin. Particularly, the aminoplast crosslinking agent (b) is preferably an etherified melamine resin prepared by at least partly etherifying methylol groups with $C_{1-4}$ alcohol.

Specific examples of the methyl etherified melamine resin may include Cymel 300, 303, 325, 327, 350, 370, 730, 736, 738, and 238 (trade names, marketed by Mitsui Cytec Ltd. respectively), Melan 522 and 523 (trade names, marketed by Hitachi Chemical Co., Ltd. respectively), Nikalac MS001, MX430 and MX650 (trade names, marketed by Sanwa Chemical Co., Ltd. respectively), Sumimal M-55, M-100 and M40S (trade names, marketed by Sumitomo Chemical Co., Ltd. respectively), Resimene 740 and 747 (trade names, marketed by Monsanto Co., Ltd. respectively) and the like. Specific examples of the butyl etherified melamine resin may include U-VAN 20SE and 225 (trade names, marketed by Mitsui Chemical Inc. respectively), Super Beckamine J820-60, L-117-60, L-109-65, L-47-508-60, L-118-60 and G821-60 (trade names, marketed by Dainippon Ink & Chemicals, Inc. respectively) and the like. Specific examples of methyl ether-butyl ether mixed etherified melamine resin may include Cymel 232, 266, XV-514 and 1130 (trade names, marketed by Mitsui Cytec Ltd. respectively), Nikalac MX500, MX600, MS35 and MS95 (trade names, marketed by Sanwa Chemical Co., Ltd. respectively), Sumimal M-65B (trade name, marketed by Sumitomo Chemical Co., Ltd.), Resimene 753 and 755 (trade names, marketed by Monsanto Co., Ltd. respectively), and the like.

The aminoplast crosslinking agent may also include an acrylic resin prepared by copolymerizing a vinyl monomer having methylol group or etherified methylol group with amino group or amide group, for example, N-methylol acrylamide, N-butoxymethylol acrylamide and the like.

The component (a) is in the range of 30 to 90% by weight, preferably 50 to 70% by weight based on the weight of the film-forming component as the solid content of the water based coating composition. The component (b) is in the range of 10 to 70% by weight, preferably 30 to 50% by weight based on the weight of the film-forming component. An amount less than 30% by weight of the component (a) may result an unsatisfactory acid resistance of the coating film. On the other hand, an amount more than 90% by weight of the component (a) may result an unsatisfactorily cured coating film. An amount less than 10% by weight of the component (b) may result an unsatisfactorily cured coating film. On the other hand, an amount more than 70% by weight of the component (b) may result an unsatisfactory acid resistance and an unsatisfactorily cured coating film.

The coating composition of the present invention may contain an acid catalyst and a catalyst prepared by neutralizing the acid catalyst. The acid catalyst may include, for example, a sulfonic acid based catalyst such as p-toluenesulfonic acid, xylenesulfonic acid, dodecylbenzenesulfonic acid, dinonylnaphthalene disulfonic acid and the like; and a phosphoric acid based catalyst such as monobutyl phosphate, dibutyl phosphate, diisopropyl phosphate, monooctyl phosphate, monodecyl phosphate, didecyl phosphate, metaphosphoric acid, orthophosphoric acid and the like.

A neutralizing agent of these acids may include a base such as ammonia and a simple organic amine. Examples of the organic amine may include a primary monoamine such as ethylamine, propylamine, butylamine, benzylamine, monoethanolamine, neopentanolamine, 2-aminopropanol and the like; a secondary monoamine such as diethylamine, diethanolamine, di-n- or di-iso-propanolamine, N-methylethanolamine, N-ethylethanolamine and the like; a tertiary monoamine such as trimethylamine, triethylamine, triisopropylamine, methyldiethanolamine, dimethylethanolamine and the like; and a polyamine such as diethylenetriamine, hydroxyethylaminoethylamine, ethylaminoethylamine, methylaminopropylamine and the like. An amount of the catalyst is desirably in the range of 0.1 to 5 parts by weight per 100 parts by weight of the film-forming component. In use, the catalyst may be dissolved into the film-forming component, or may be dissolved into the aqueous phase so that a dispersion stability of the particles in water may be improved.

The water based coating composition of the present invention is such that the film-forming component comprising the components (a) and (b), and the catalyst are dispersed by use of the suspension stabilizer so as to be a mean particle size in the range of 0.1 to 10 $\mu$m. The mean particle size is represented by a 50% cumulative particle size. A mean particle more than 10 $\mu$m may cause reduction in finishing and agglomeration during storage. A mean particle size less than 0.1 $\mu$m may cause undesirably remarkable increase in viscosity.

The water dispersion of the film-forming component may be carried out by use of an agitator with high shear, for example, a homogenizer. In the case where the film-forming component has a high viscosity so that formation of the dispersion may be difficult, addition of a solvent to the film-forming component may reduce the viscosity so as to be dispersed, followed by desolvating to prepare a water based coating composition. Dispersion may be carried out by a method which comprises dissolving a suspension stabilizer into water to form an aqueous solution followed by adding a coating composition to the aqueous solution, so as to be dispersed, or by a method which comprises adding a suspension stabilizer to the coating composition, followed by adding water so as to be dispersed.

A concentration as a solid content of the water based coating composition of the present invention is controlled in the range of 50 to 80% by weight. A solid content less than 50% by weight of the water based coating composition makes difficult a viscosity control of the water based coating composition, resulting in developing bubbling and sagging on coating. On the other hand, a solid content more than 80% by weight may undesirably reduce coating workability.

An acrylic resin used as a suspension stabilizer has a hydroxyl value (mgKOH/g) in the range of 10 to 300, preferably 20 to 200. A hydroxyl value less than 10 mgKOH/g of the acrylic resin may result unsatisfactory water dispersion properties, and may reduce acid resistance and water resistance, because the acrylic resin may not be introduced into a crosslinking system. On the other hand, a hydroxyl value more than 300 mgKOH/g may reduce a compatibility between the acrylic resin and the film-forming component, resulting in reducing appearance, acid resistance and water resistance of a coating film. A hydroxyl group-containing monomer to be copolymerized with the acrylic resin so as to impart a hydroxyl value to the acrylic resin may include, $C_{2\text{-}8}$ hydroxyalkyl esters of (meth)acrylic acid, for example, 2-hydroxyethyl (meth)acrylate, hydroxypropyl (meth)acrylate and the like; N-methylol acrylamide, allyl alcohol, $\varepsilon$-caprolactone-modified acryl monomer and the like. These monomers may be used alone or in combination.

The above acrylic resin suitably has an acid value (mgKOH/g) in the range of 10 to 300, preferably 20 to 200. An acid value less than 10 may reduce a dispersion stability of a water-dispersed coating composition. On the other hand, an acid value more than 300 may reduce a compatibility between the acrylic resin and the film-forming component, resulting in reducing the appearance, acid resistance and water resistance. An acid group-containing monomer to be copolymerized with the acrylic resin so as to impart an acid value to the acrylic resin may include (meth)acrylic acid, maleic acid, crotonic acid, itaconic acid, $\beta$-carboxyethylacrylate, 2-acrylamide-2-methylpropane sulfonic acid, allylsulfonic acid, sulfoethyl methacrylate, or phosphoric acid-containing monomer such as Light-Ester PM (trade name, marketed by Kyoeisha Chemical Co., Ltd.) and the like. These may be used alone or in combination.

The basic substance used as a neutralizing agent for these acids may include, for example, hydroxides of alkaline metal or alkaline earth metal such as sodium hydroxide, potassium hydroxide, lithium hydroxide, calcium hydroxide, barium hydroxide and the like; ammonia, primary monoamine such as ethylamine, propylamine, butylamine, benzylamine, monoethanolamine, neopentanolamine, 2-aminopropanol and the like; secondary monoamine such as diethylamine, diethanolamine, di-n- or di-iso-propanolamine, N-methylethanolamine, N-ethylethanolamine and the like; tertiary monoamine such as trimethylamine, triethylamine, triisopropylamine, methyldiethanolamine, dimethylethanolamine, and the like; polyamine such as diethylenetriamine, hydroxyethylaminoethylamine, ethylaminoethylamine, methylaminopropylamine and the like. Of these the tertiary monoamine is particularly preferable. A neutralization equivalent is in the range of 0.7 to 1.5. Other monomers constituting the acrylic acid may include $C_{1-22}$ alkyl ester of (meth) acrylic acid such as methyl (meth)acrylate, ethyl (meth)acrylate, n-butyl (meth)acrylate, i-butyl (meth)acrylate, t-butyl (meth)acrylate, 2-ethylhexyl (meth)acrylate and the like, styrene, isobornyl (meth)acrylate and the like. The acrylic resin preferably has a weight average molecular weight in the range of 5000 to 100000. A weight average molecular weight less than 5000 may reduce a water dispersibility of the coating film-forming component. A weight average molecular weight more than 100000 may reduce a compatibility with the coating film-forming component.

The suspension stabilizer may be used in an amount of 0.1 to 40 parts by weight, particularly 1 to 40 parts by weight. An amount less than 0.01 part by weight may reduce a water dispersibility of particles. An amount more than 40 parts by weight may increase an amount of a neutralizing amine contained in the suspension stabilizer, resulting in increasing a VOC content.

For the purpose of further improving the water dispersibility of particles, an emulsifier may be used. The emulsifier may include, for example, an anionic emulsifier having a neutralized acid, a nonionic emulsifier having an ethylene oxide linkage, an acetylene based surface active agent and the like.

A thickening agent may be added to the water based coating composition and control a viscosity of the water based coating composition so as to be sprayed. A mixing amount of the thickening agent may not particularly be limited unless a compatibility with the water based coating composition is reduced.

The water based coating composition may optionally contain additives such as a surface active agent, antifoaming agent, pigment and the like.

The water based coating composition of the present invention has a resistance to a natural corrosive substance such as the acid rain and the like, and is suitable to a top clear coating for use in an automobile. The water based coating composition is coated onto a water based base coat. The base coat and top clear coat may be heat cured by a wet-on-wet coating method at a curing temperature of 20 to 150°C for 20 to 40 minutes so as to be crosslinked simultaneously.

Example

The present invention is explained by the following Examples, in which "part" means "part by weight". The present invention is not limited to these Examples.

Preparation Example of Blocked Isocyanate Compound (A-1):

A reactor equipped with a stirrer, temperature controller and reflux condenser was charged with 500 parts of Takenate D-170NH*, followed by heating at 60°C, dropping 348.2 parts of 2-ethylhexanol over one hour, heating up to 120°C, and stirring until a NCO value becomes 1 (one) or less to obtain a blocked isocyanate compound having a number average molecular weight of 1300.

Preparation Example of Blocked Isocyanate Compound (A-2):

A reactor equipped with a stirrer, temperature controller and reflux condenser was charged with 500 parts of Takenate D-170NH (trade name as above), followed by heating at 120°C, dropping 267.8 parts of cyclohexanol over one hour, stirring until a NCO value becomes 1 (one) or less to obtain a blocked isocyanate compound having a number average molecular weight of 1090.

Preparation Example of Blocked Isocyanate Compound (A-3):

A reactor equipped with a stirrer, temperature controller and reflux condenser was charged with 500 parts of Takenate D-170NH (trade name as above), followed by heating at 60°C, dropping 85.8 parts of methanol over one hour, heating up to 120°C, and stirring until a NCO value becomes 1 (one) or less to obtain a blocked isocyanate compound having a number average molecular weight of 880.

Preparation Example of Blocked Isocyanate Compound (A-4):

A reactor equipped with a stirrer, temperature controller and reflux condenser was charged with 500 parts of Sumidur N-3200*, followed by heating at 120°C, dropping 356.9 parts of 2-ethylhexanol over one hour, and stirring until a NCO value becomes 1 (one) or less to obtain a blocked isocyanate compound having a number average molecular weight of 1500.

*Takenate D-170NH: Trade name, marketed by Takeda Chemical Industries Ltd., hexamethylene diisocyanate type.
 * Sumidur N-3200: Trade name, marketed by Sumitomo Bayel Urethane Co., Ltd., hexamethylene diisocyanate biuret type.

Preparation Example of Blocked Isocyanate Compound (A-5):

A reactor equipped with a stirrer, temperature controller and reflux condenser was charged with 500 parts of IPDI*, followed by heating at 120°C, dropping 117.2 parts of 2-ethylhexanol over one hour, and stirring until a NCO value becomes 1 (one) or less to obtain a blocked isocyanate compound having a number average molecular weight of 350.

Preparation Example of Blocked Isocyanate Compound (A-6):

A reactor equipped with a stirrer, temperature controller and reflux condenser was charged with 500 parts of Takenate D-170NH (trade name as above), followed by heating at 120°C, dropping 334.3 parts of 2-ethylhexanol and 5 parts of 1,4-butanediol over one hour, and stirring until a NCO value becomes 1 (one) or less to obtain a blocked isocyanate compound having a number average molecular weight of 4000.

Preparation Example of Blocked Isocyanate Compound (A-7):

A reactor equipped with a stirrer, temperature controller and reflux condenser was charged with 80 parts of xylene, followed by heating at 120°C, dropping the following monomer composition over 3 hours:

| | |
|---|---|
| isocyanate ethyl methacrylate | 30 parts |
| isobutyl acrylate | 30 parts |
| n-butyl acrylate | 20 parts |
| xylene | 20 parts |
| dodecylmercaptane | 5 parts |
| V-59* | 3 parts |

V-59*: Trade name, marketed by Wako Pure Chemicals Industries, Ltd., 2,2-azobisbutylonitrile.

After the completion of dropping, the temperature was kept for one hour, followed by dropping a solution of 0.5 part by weight of V-59 (trade name as above) and 10 parts of xylene over one hour, keeping at that temperature for one hour to prepare an isocyanate group-containing acrylic resin. A reactor equipped with a stirrer, temperature controller and reflux condenser was charged with 892 parts of the acrylic resin, followed by heating at 120°C, dropping 138.3 parts of 2-ethylhexanol over one hour, and stirring until an urethane value becomes 1 (one) or less to obtain a blocked isocyanate compound having a number average molecular weight of 4600.

Preparation Example of Aminoplast Crosslinking Agent (B-1):

A reactor equipped with a stirrer, temperature controller and reflux condenser was charged with 65 parts of xylene, followed by heating at 110°C, dropping the following composition over 3 hours:

| | |
|---|---|
| N-butoxymethyl acrylamide* | 20 parts |
| isobutyl methacrylate | 30 parts |
| n-butyl methacrylate | 20 parts |
| styrene | 20 parts |
| V-59 (trade name as above) | 5 parts |

After the completion of dropping, the temperature was kept for one hour, followed by dropping a solution of 0.5 part by weight of V-59 (trade name as above) and 10 parts of xylene over one hour, and keeping the temperature for one hour to obtain an aminoplast crosslinking agent (B-1).

Preparation Example of Suspension Stabilizer:

A reactor equipped with a stirrer, temperature controller and reflux condenser was charged with 65 parts of n-butanol, followed by heating at 110°C, and dropping the following composition over 3 hours:

 * IPDI: Trade name, marketed by Huls A.G., isophorone diisocyanate.

| | |
|---|---|
| RMA-450M* | 20 parts |
| hydroxyethyl acrylate | 10 parts |
| acrylic acid | 10 parts |
| methyl methacrylate | 25 parts |
| n-butyl methacrylate | 20 parts |
| styrene | 10 parts |
| V-59 (trade name as above) | 2 parts |

* RMA450M: Trade name, marketed by Nippon Newkazai Co., Ltd., polyethylene oxide (45 mer) methacrylate.

After the completion of dropping, the temperature was kept for one hour, followed by dropping a solution of 0.5 part of V-59 (trade name as above) and 10 parts of n-butanol over one hour, keeping at that temperature for one hour, neutralizing by 0.7 equivalent with dimethylethanolamine, and adding deionized water and diluting until a resin content becomes 30% by weight.

Preparation Example 1 of Water Based Coating Composition:

Into a macromolecule aqueous solution comprising 16.7 parts of the 30% aqueous acrylic resin solution as the suspension stabilizer and 74.2 parts of an ion exchange water was added 100 parts of the coating film-forming component, followed by mixing the resulting mixture by use of a homogenizer at 14000 rpm to obtain a water based coating composition (hereinafter may be referred to as a preparation method 1).

Preparation Example 2 of Water Based Coating Composition:

Into an aqueous macromolecule solution comprising 16.7 parts of the 30% aqueous acrylic resin solution as the suspension stabilizer and 74.2 parts of an ion exchange water was added 125 parts of a 80% xylene solution of the coating film-forming component, followed by mixing the resulting mixture by use of a homogenizer at 14000 rpm to obtain a suspension, and diluting the suspension with 25 parts of deionized water. The diluted suspension was introduced into a reactor equipped with a stirrer, temperature controller, reflux condenser and vacuum apparatus, followed by heating the diluted suspension up to 55°C, controlling at a vacuum of 120 mmHg, and carrying out desolvation until a heating residue becomes 55%.
Distilling off of the solvent was followed by filtrating with a 200 mesh silk cloth, and removing agglomerates to obtain a water based coating composition (hereinafter may be referred to as a preparation method 2).

Examples 1-13:

Compositions of water based coating compositions prepared according to the above preparation methods 1 and 2 are shown in Table 1 respectively.

Table 1 (1)

| | | | Examples | | | | | | |
|---|---|---|---|---|---|---|---|---|---|
| | | | 1 | 2 | 3 | 4 | 5 | 6 | 7 |
| Coating film-forming component | Blocked isocyanate compound | A-1 | 60 | | | | | | |
| | | A-2 | | 60 | | | | | |
| | | A-3 | | | 60 | | | | |
| | | A-4 | | | | 60 | | | |
| | | A-5 | | | | | 60 | | |
| | | A-6 | | | | | | 60 | |
| | | A-7 | | | | | | | 60 |
| | Aminoplast cross-linking agent | Cymel 303 (Note 1) | 40 | 40 | 40 | 40 | 40 | 40 | 40 |
| | | Cymel 238 (Note 2) | | | | | | | |
| | | Cymel 370 (Note 3) | | | | | | | |
| | | B-1 | | | | | | | |
| Catalyst | | Nacure 5543 (Note 4) | 1.0 | 1.0 | 1.0 | 1.0 | 1.0 | 1.0 | 1.0 |
| Suspension stabilizer | | | 5.0 | 5.0 | 5.0 | 5.0 | 5.0 | 5.0 | 5.0 |
| Heating residue (%) | | | 55 | 55 | 55 | 55 | 55 | 55 | 55 |
| Preparation method of water based coating composition | | | method 1 | method 1 | method 1 | method 1 | method 1 | method 2 | method 2 |

Table 1 (2)

| | | | Examples | | | | | |
|---|---|---|---|---|---|---|---|---|
| | | | 8 | 9 | 10 | 11 | 12 | 13 |
| Coating film-forming component | Blocked isocyanate compound | A-1 | 80 | 40 | 30 | 60 | 60 | 60 |
| | | A-2 | | | | | | |
| | | A-3 | | | 30 | | | |
| | | A-4 | | | | | | |
| | | A-5 | | | | | | |
| | | A-6 | | | | | | |
| | | A-7 | | | | | | |
| | Aminoplast cross-linking agent | Cymel 303 (Note 1) | 20 | 60 | 40 | | | |
| | | Cymel 238 (Note 2) | | | | 40 | | |
| | | Cymel 370 (Note 3) | | | | | 40 | |
| | | B-1 | | | | | | 40 |
| Catalyst | | Nacure 5543 (Note 4) | 1.0 | 1.0 | 1.0 | 1.0 | 1.0 | 1.0 |
| Suspension stabilizer | | | 5.0 | 5.0 | 5.0 | 5.0 | 5.0 | 5.0 |
| Heating residue (%) | | | 55 | 55 | 55 | 55 | 55 | 55 |
| Preparation method of water based coating composition | | | method 1 | method 1 | method 1 | method 1 | method 2 | method 2 |

In Table 1, (Note 1) to (Note 4) means as follows respectively.

(Note 1): Cymel 303: trade name, marketed by Mitsui Cytec Ltd., methyl ether type full ether melamine, solid content about 100%.
(Note 2): Cymel 370: trade name, marketed by Mitsui Cytec Ltd., methyl ether type partly ether melamine, solid content about 88%.
(Note 3): Cymel 238: trade name, marketed by Mitsui Cytec Ltd., methyl butyl mixed ether type full ether melamine, solid content about 100%.
(Note 4): Nacure 5543: trade name, marketed by Kusumoto Chemical's Ltd., dodecylbenzenesulfonic acid isopropanolamine neutralized product, solid content 25%.

Comparative Examples 1-4

Compositions of coating film-forming components and water based coating compositions in Comparative Examples 1-4 are shown in Table 2 respectively.

Table 2

| | | | Comparative Examples | | | |
|---|---|---|---|---|---|---|
| | | | 1 | 2 | 3 | 4 |
| Coating film-forming component | Blocked isocyanate compound | A-1 | 20 | 95 | 60 | 60 |
| | Aminoplast crosslinking agent | Cymel 303 | 80 | 5 | 40 | 40 |
| Catalyst | | Nacure 5543 | 1.0 | 1.0 | 1.0 | 5.0 |
| Suspension stabilizer | | | 5.0 | 5.0 | 0.0 | 0.0 |
| Heating residue (%) | | | 55 | 55 | 55 | 55 |
| Preparation method of water based coating composition | | | method 1 | method 1 | method 1 | method 2 |

Preparation Example of Water Based Base Coat Coating Composition:

A mixture of 45 parts (solid content) of the following water-soluble acrylic resin (C-1), 30 parts (solid content) of the following water dispersible polyester resin (C-2), 25 parts of the following butyl etherified methylolmelamine resin (C-3), 10 parts of the metallic pigment and 2 parts of a blue organic pigment was mixed and dispersed to obtain a water based base coat coating composition.

Water-Soluble Acrylic Resin (C-1):

A reactor equipped with a thermometer, thermostat, stirrer, reflux condenser and dropping apparatus was charged with 70 parts of butyl cellosolve, followed by heating at 115°C while introducing nitrogen gas, dropping a mixed solution of 30 parts of styrene, 15 parts of methyl methacrylate, 16.7 parts of n-butyl acrylate, 20 parts of 2-ethylhexyl acrylate, 12 parts of hydroxyethyl methacrylate, 6.3 parts of acrylic acid and one part of azobisisobutylonitrile over about 3 hours, leaving to stand at 115°C for one hour, dropping 0.3 part of azobisisobutylonitrile and 10 parts of butyl cellosolve over one hour, leaving to stand at 115°C for one hour to complete the reaction and to obtain an acrylic resin having an acid value of 50 mgKOH/g, a hydroxy value of 50 mgKOH/g and a number average molecular weight of 45000, and neutralizing the carboxyl group of the acrylic resin with dimethylaminoethanol by an equivalent to obtain a 55% solid content aqueous acrylic resin solution (C-1).

Water-Dispersible Polyester Resin (C-2):

A reactor equipped with a thermometer, thermostat, stirrer, water separator and reflux condenser was charged with 35.95 parts of neopentyl glycol, 11.68 parts of trimethylolpropane, 25.34 parts of phthalic anhydride and 31.24 parts of adipic acid, followed by heating up to 230°C over 3 hours while distilling off water, adding a small amount of xylol, reacting for 5 hours under reflux while distilling off water by the water separator, adding 6.57 parts of trimellitic anhydride, reacting at 180°C for one hour, adding butyl cellosolve to obtain a polyester resin solution having a non-volatile matter content of 70%, an acid value of 40 mgKOH/g, a hydroxy value of 80 mgKOH/g and a number average molecular weight of 6000, and adding deionized water to obtain a 35% solid content polyester emulsion (C-2). (C-3):
U-Van 28-60 (trade name, marketed by Mitsui Chemicals, Inc., butyl etherified methylolmelamine resin).
Metallic pigment: Alumipaste N7680 (trade name, marketed by Toyo Aluminum K.K.).
Blue organic pigment: Heliogen Blue-L6900 (trade name, marketed by BASF A.G., cyanine blue.
Coating compositions obtained in Examples and Comparative Examples were subjected to the following performance tests for evaluation.

1. Water Dispersion Stability of Particles
    A dispersion stability of a powder coating composition water dispersion was visually evaluated based on conditions of dispersion and changes in particle size after desolvation and after one month storage at 30°C respectively as follows: ○: spittings and oil drops are not observed; and settled but easily redispersible; ·: spittings and oil drops are observed in the coating composition, and not redispersible.
    The particle size was determined by measuring a mean particle size (50% cumulative particle size) by use of Microtrac FRA (trade name, marketed by Leeds & Northrup Co., Ltd.).

2. Appearance:

An epoxy-based cationic electrodeposition coating composition was coated onto a zinc phosphate-treated 0.8 mm thick dull steel plate so as to be a dry film thickness of 20 μm, followed by heat curing to form a cured electrodeposition coating film, coating a surfacer as an intercoat used in the automobile onto the electrodeposition coating film so as to be a dry film thickness of 25 μm by an electrostatic coating, heat curing at 140°C for 30 minutes, wet sanding with a #400 sand paper, hydro-extracting and drying, coating the water based base coat coating composition as prepared in the above Preparation Example after controlling the viscosity at 45 seconds by Ford cup #4, 20°C so as to be a cured coating film of 15 μm, preheating at 80°C for 10 minutes to obtain a test substrate. A water based coating composition was coated onto the test substrate so as to be a dry film thickness of 40 μm by an electrostatic coating, followed by preheating at 80°C for 10 minutes, and heat curing at 140°C for 30 minutes to obtain a coating test panel. Appearance of the resulting coating film was evaluated based on transparency, gloss, smoothness of the coating film as follows: ○: good; Δ: slightly poor; ·: poor.

3. Water Resistance:

A coating test panel was dipped into a hot water at 40°C for 10 days, followed by visually evaluating the appearance of the coating film as follows: ○: No changes in the coating film; Δ: some blisters developed in the coating film; ·: remarkable developments of blisters and whitening in the coating film.

4. Acid Resistance: Onto the coating test panel was dropped 0.4 ml of 45% sulfuric acid, followed by keeping on a hot plate at 85°C for 30 minutes, and evaluating as follows: ○: No changes in conditions of the coating film; Δ: No changes in the coating film, but a slight etching on the boundary between a dropped area and a non-dropped area; ·: the coating film is seriously corroded so that etching may reach the base coat.

4. VOC: A VOC ($kg/m^3$) was calculated by the following equation from a solid content (% by weight), moisture content (% by weight) and specific gravity of the water based coating composition. The solid content in the water based coating composition was determined from a weight loss after drying 0.5 g of the water based coating composition at 110°C for one hour. A moisture content was determined by a Karl Fischer's method,

$$VOC\ (kg/m^3) = \frac{\left\{100 - \begin{pmatrix} solid\ content\ +\ moisture\ content \\ (\%\ by\ weight)\ \ \ (\%\ by\ weight) \end{pmatrix}\right\} \times \begin{array}{c} specific\ gravity\ of \\ coating\ composition \\ (kg/m^3) \end{array}}{100 - \begin{array}{c} moisture\ content \\ (\%\ by\ weight) \end{array} \times \dfrac{\begin{array}{c} specific\ gravity\ of \\ coating\ composition \\ (kg/m^3) \end{array}}{\begin{array}{c} specific\ gravity\ of \\ water \\ (kg/m^3) \end{array}}}$$

Table 3 (1)

| | | Examples | | | | | | | |
|---|---|---|---|---|---|---|---|---|---|
| | | 1 | 2 | 3 | 4 | 5 | 6 | 7 | 8 |
| Dispersability | Conditions of dispersion | ◯ | ◯ | ◯ | ◯ | ◯ | ◯ | ◯ | ◯ |
| | Particle size (μm) | 1.4 | 1.3 | 1.4 | 1.4 | 1.2 | 1 | 1.3 | 1.2 |
| | Conditions of dispersion after storage | ◯ | ◯ | ◯ | ◯ | ◯ | ◯ | ◯ | ◯ |
| | Particle size (μm) after storage | 1.5 | 1.2 | 1.4 | 1.5 | 1.2 | 1.1 | 1.3 | 1.2 |
| Appearance | | ◯ | ◯ | ◯ | ◯ | ◯ | ◯ | ◯ | ◯ |
| Water resistance | | ◯ | ◯ | ◯ | ◯ | ◯ | ◯ | ◯ | ◯ |
| Acid resistance | | ◯ | ◯ | ◯ | ◯ | ◯ | ◯ | ◯ | ◯ |
| VOC (kg/m$^3$) | | 107.8 | 107.8 | 95.8 | 107.8 | 119.8 | 71.9 | 83.9 | 119.8 |

Table 3 (2)

| | | Examples | | | | Comparative Examples | | | |
|---|---|---|---|---|---|---|---|---|---|
| | | 10 | 11 | 12 | 13 | 1 | 2 | 3 | 4 |
| Dispersability | Conditions of dispersion | ◯ | ◯ | ◯ | ◯ | ◯ | ◯ | · | ◯ |
| | Particle size (μm) | 1.3 | 1.5 | 1.2 | 1.2 | 1.1 | 1.4 | – | 1.1 |
| | Conditions of dispersion after storage | ◯ | ◯ | ◯ | ◯ | ◯ | ◯ | · | · |
| | Particle size (μm) after storage | 1.4 | 1.5 | 1.2 | 1.2 | 1.1 | 1.5 | – | – |
| Appearance | | ◯ | ◯ | ◯ | ◯ | ◯ | ◯ | – | △ |
| Water resistance | | ◯ | ◯ | ◯ | ◯ | △ | · | – | △ |
| Acid resistance | | ◯ | ◯ | ◯ | ◯ | · | · | – | △ |
| VOC (kg/m$^3$) | | 107.8 | 107.8 | 59.9 | 71.9 | 131.8 | 107.8 | – | 179.7 |

Effect of the Invention:

The present invention can provide a water based coating composition containing a VOC as low as less than 179.7 kg/m$^3$, and can form a coating film showing good properties in acid resistance, and coating film appearance.

The coating film-forming component in the water based coating composition of the present invention is very stable in water and is particularly suitable for the water-based coating composition. The coating film-forming component in the present invention scarcely shows solubility and dispersibility into water by itself, but dispersion thereof with the suspension stabilizer shows excellent dispersion stability.

Industrial Applicability:

The water based coating composition of the present invention is useful, for example, as a topcoat of the automobile.

**Claims**

1. A water based coating composition prepared by dispersing by use of a suspension stabilizer into water a film-forming component comprising 30 to 90% by weight of (a) a blocked isocyanate compound having at least two blocked isocyanate groups in one molecule and a number average molecular weight of 150 to 5000, and 10 to 70% by weight of (b) a methylol group or methylol ether group-containing aminoplast crosslinking agent, so that the film-forming component may be dispersed into water in the form of a mean particle size by a 50% cumulative particle size of 0.1 to 10 $\mu$m.

2. A water based coating composition as claimed in claim 1, wherein a blocking agent used in the blocked isocyanate compound is a monohydric alcohol having $C_{1-20}$ alkyl group.

3. A water based coating composition as claimed in claim 1 or 2, wherein the isocyanate used in the blocked isocyanate compound is a polyisocyanate derived from hexamethylene diisocyanate.

4. A water based coating composition as claimed in any one of claims 1 to 3, wherein the aminoplast crosslinking agent is a melamine resin.

5. A water based coating composition as claimed in any one of claims 1 to 4, wherein the suspension stabilizer includes ones prepared by neutralizing an acrylic resin having a hydroxy value of 10 to 300 mgKOH/g, an acid value of 10 to 300 mgKOH/g and a weight average molecular weight of 5000 to 100000 with a basic substance.

6. A water based coating composition as claimed in any one of claims 1 to 5, wherein the suspension stabilizer is in the range of 0.1 to 40 parts by weight per 100 parts by weight of the coating film-forming component in the water based coating composition.

7. A water based coating composition as claimed in any one of claims 1 to 6, wherein the water based coating composition contains a volatile organic compound in an amount of 179.7 kg/m$^3$ or less.

8. A water based coating composition as claimed in any one of claims 1 to 7, wherein the water based coating composition is a clear coating composition.

9. A water based coating composition as claimed in any one of claims 1 to 8, wherein the water based coating composition is used as a topcoat for the automobile.

10. A water based coating composition as claimed in any one of claims 1 to 9, wherein the water based coating composition is coated onto a water based base coat by a wet-on-wet coating.

## INTERNATIONAL SEARCH REPORT

| International application No. |
| --- |
| PCT/JP01/08685 |

**A. CLASSIFICATION OF SUBJECT MATTER**
Int.Cl$^7$   C09D175/04, C09D161/28, C09D133/08, C09D5/02

According to International Patent Classification (IPC) or to both national classification and IPC

**B. FIELDS SEARCHED**

Minimum documentation searched (classification system followed by classification symbols)
Int.Cl$^7$   C09D175/04, C09D161/28, C09D133/08, C09D5/02

Documentation searched other than minimum documentation to the extent that such documents are included in the fields searched
| | | | |
| --- | --- | --- | --- |
| Jitsuyo Shinan Koho | 1922-1996 | Toroku Jitsuyo Shinan Koho | 1994-2001 |
| Kokai Jitsuyo Shinan Koho | 1971-2001 | Jitsuyo Shinan Toroku Koho | 1996-2001 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | US 5852120 A (Herberts GmbH),<br>22 December, 1998 (22.12.98),<br>Claim 1; column 5, lines 32 to 34; column 9, lines 36 to 42; column 9, lines 17 to 18; column 8, lines 36 to 38; column 13, line 2<br>& EP 0579193 A1     & JP 6-172705 A | 1-10 |
| Y | US 5747166 A (BASF Corporation),<br>05 May, 1998 (05.05.98),<br>Claim 2; column 7, lines 16 to 17; column 7, line 56; column 9, line 25; column 10, line 38; column 10, line 23; column 8, lines 46 to 48; column 10, lines 9 to 13<br>& WO 93/07195 A1     & JP 6-506725 A<br>& JP 3027192 B2 | 1-10 |
| Y | US 5460892 A (Herberts GmbH),<br>24 October, 1995 (24.10.95),<br>Claim 1<br>& EP 0607792 A1     & JP 6-234952 A | 1-10 |

☒ Further documents are listed in the continuation of Box C.     ☐ See patent family annex.

| | |
| --- | --- |
| *     Special categories of cited documents:<br>"A"   document defining the general state of the art which is not considered to be of particular relevance<br>"E"   earlier document but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| 24 October, 2001 (24.10.01) | 06 November, 2001 (06.11.01) |

| Name and mailing address of the ISA/<br>   Japanese Patent Office | Authorized officer |
| --- | --- |
| Facsimile No. | Telephone No. |

Form PCT/ISA/210 (second sheet) (July 1992)

**INTERNATIONAL SEARCH REPORT**

| International application No. |
| --- |
| PCT/JP01/08685 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 4-106171 A (Kansai Paint Co., Ltd.), 08 April, 1992 (08.04.92), Claim 1   (Family: none) | 1-10 |
| Y | JP 10-101995 A (Toyota Motor Corporation), 21 April, 1998 (21.04.98), working example 3   (Family: none) | 1-10 |
| Y | JP 3-172368 A (Nippon Paint Co., Ltd.), 25 July, 1991 (25.07.91), Claim 1   (Family: none) | 1-10 |
| Y | JP 5-320562 A (Kansai Paint Co., Ltd.), 03 December, 1993 (03.12.93), Claim 1   (Family: none) | 1-10 |
| Y | JP 9-157309 A (Nippon Paint Co., Ltd.), 17 June, 1997 (17.06.97), Claim 1   (Family: none) | 1-10 |
| Y | US 5071904 A (PPG Industries, Ibc.), 10 December, 1991 (10.12.91), Claim 1 & EP 0401565 A1     & JP 8-48913 A | 1-10 |
| Y | US 5987727 A (Herberts GmbH), 23 November, 1999 (23.11.99), Claim 1 & WO 97/36694 A1     & JP 2000-507495 A | 1-10 |

Form PCT/ISA/210 (continuation of second sheet) (July 1992)